# EUROPÄISCHE PATENTSCHRIFT

(11) **EP 1 346 822 B1**
(45) Veröffentlichungstag und Bekanntmachung des Hinweises auf die Patenterteilung: **27.02.2008**
(21) Anmeldenummer: 03005081.9
(22) Anmeldetag: 07.03.2003
(51) Int. Cl.: B32B 17/10, C03C 17/22, E04D 3/06, E04F 10/00, G09F 13/20, F21V 21/00

(54) **Gebäudedachelement**
Roof element for buildings
Elément de toit pour bâtiments

(30) Priorität: 17.03.2002 DE 20204263 U
(43) Veröffentlichungstag der Anmeldung: 24.09.2003
(73) Patentinhaber: Döppner Bauelemente GmbH & Co. KG, 36137 Grossenlüder (DE)
(72) Erfinder: Döppner, Christoph, 36124 Eichenzell (DE)
(74) Vertreter: Patentanwälte Ruff, Wilhelm, Beier, Dauster & Partner

(56) Entgegenhaltungen:
- EP-A- 0 274 974
- EP-A- 0 593 940
- EP-A- 0 900 971
- EP-A- 1 154 199
- WO-A-99/19581
- DE-A- 4 303 055
- DE-U- 8 529 956
- DE-U- 8 710 619
- US-A- 5 105 303
- "Leuchtende Bilder in Glasscheiben" HTTP:, [Online] XP002241074 Gefunden im Internet: <URL:www.schott.com/architecture/english/n ews/press.html> [gefunden am 2003-05-13]
- "LightPoints(TM)" HTTP:, [Online] XP002242278 Gefunden im Internet: <URL:www.schott.com/special flat glass/german/products design solutions/ligth points.html> [gefunden am 2003-05-13]

## Beschreibung

Die Erfindung betrifft ein Gebäudedachelement mit wenigstens zwei transparenten Scheiben, das insbesondere als Verbundglaselement ausgebildet ist.

Ein bekanntes Gebäudedachelement ist beispielsweise in der EP 1 114 900 A beschrieben. Dieses Gebäudedachelement weist eine transparente Abdeckplatte auf.

Typische transparente Elemente sind beispielsweise Fenster, die in der Regel an jedem Gebäude vorhanden sind. Darüber hinaus gibt es eine Vielzahl weiterer Anwendungsbereiche für transparente Elemente, beispielsweise großflächige Glasfronten an Gebäuden, Schaufenster, Gebäudedachelemente usw. Insbesondere die neuere Architektur setzt verstärkt auf transparente Elemente, die Gebäude lebendiger erscheinen lassen.

Die EP 247974 A1 beschreibt ein Gebäudedachelement in Form eines Dachfensters, das zur Entfernung von Schnee oder Reif mit Heizdrähten auf der Innenseite einer Scheibe versehen ist. Über Verbindungsmittel wird ein elektrischer Anschluss an eine Stromquelle hergestellt. Bei Stromdurchfluss erwärmt sich der Heizdraht und befreit die Scheibe von Schnee oder Reif.

Die DE 4303055 A1 beschreibt eine photovoltaische Zelle mit einer Glasscheibe, die mit einer lichtdurchlässigen stromleitenden Beschichtung versehen ist. Zusätzlich dazu sind Leiterbahnen in Berührungskontakt mit dieser Beschichtung vorgesehen, die die Leitfähigkeit verbessern. Die Leitbahnen können in Nuten einer Scheibe verlaufen, da sie sich dann besser in die Scheibe integrieren lassen und ein guter Kontakt mit der Beschichtung möglich ist.

Die EP 900 971 A1 beschreibt einen beleuchteten Regalboden für eine Vitrine mit einer Glasplatte, an der Leuchtdioden befestigt sind. Zur elektrischen Versorgung sind dünne und unsichtbare Leiterbahnen in Form von Schichten vorgesehen, und zwar auf der gleichen Fläche der Glasplatte wie die Leuchtdioden, vorteilhaft auf der Unterseite. Derartige Leiterbahnen sind somit nicht oder nur kaum sichtbar.

Jedoch ist es bei Gebäudedachelementen schwierig, zusätzliche, insbesondere gebäudeinfrastrukturelle Elemente, beispielsweise Beleuchtungseinrichtungen o. dgl. an den transparenten Elementen anzubringen.

Aufgabe der Erfindung ist es daher, ein Gebäudedachelement zu schaffen, das gegenüber dem Stand der Technik zusätzliche Anwendungsmöglichkeiten bietet.

Diese Aufgabe wird durch ein Gebäudedachelement mit den Merkmalen des Anspruchs 1 gelöst. Weiterbildungen der Erfindung sind in den Unteransprüchen dargestellt.

Das erfindungsgemäße Gebäudedachelement zeichnet sich dadurch aus, dass die transparenten Scheiben wenigstens eine Aufnahme für wenigstens einen Stromverbraucher besitzen. Die Stromzufuhr zur Versorgung des Stromverbrauchers ist in die transparenten Scheiben integriert.

Dadurch ist es also möglich, für Gebäudedachelemente mit transparenten Scheiben ein breites Spektrum von Anwendungsmöglichkeiten zu öffnen. Transparente Scheiben besitzen in aller Regel ein oder zwei Funktionen, nämlich zum einen infolge ihrer Lichtdurchlässigkeit eine Art passive Beleuchtungsfunktion und zum anderen infolge ihrer Tragfähigkeit eine Art Gebäudestützfunktion.

Die transparenten Scheiben des erfindungsgemäßen Gebäudedachelements besitzen eine ganze Reihe weiterer Funktionen, abhängig davon, welche Art von Stromverbraucher verwendet wird.

Die transparente Scheibe ist vorzugsweise aus Glas. Es ist aber auch der Einsatz eines transparenten Kunststoffs, beispielsweise von Acrylglas möglich. Die wenigstens eine Scheibe des transparenten Elements ist vorzugsweise eben bzw. plan. Es sind jedoch auch Scheiben einsetzbar, die gekrümmte Bereiche aufweisen. Die Stromzufuhr für den Stromverbraucher ist in das transparente Element integriert. Vorzugsweise bedeutet dies, dass die Stromzufuhr zumindest größtenteils entlang einer Außenfläche der Scheibe verläuft und insbesondere bei einer Scheibe mit dieser verbunden bzw. an dieser befestigt ist. Es ist jedoch auch denkbar, die Stromzufuhr in das Scheibenmaterial zu integrieren, beispielsweise es darin einzubetten.

Als elektrische Verbraucher kann beispielsweise eine Beleuchtungseinrichtung mit einem oder mehreren Leuchtmitteln, beispielsweise Lampen, vorgesehen sein. Die transparente Scheibe besitzt dadurch eine Art aktive Beleuchtungsfunktion. Es sind auch akustische Einrichtungen einsetzbar, beispielsweise Lautsprecher. Die transparente Scheibe besitzt hier eine Beschallungsfunktion. Der Stromverbraucher kann auch eine optische Einrichtung sein, beispielsweise eine Überwachungskamera. Es kann auch ein Wärme- oder Temperatursensor als Stromverbraucher eingesetzt werden. Die transparente Scheibe kann beispielsweise ein Schaufenster sein, in das eine Beleuchtungseinrichtung mit mehreren Leuchten bzw. Lampen integriert ist. Dadurch ist eine Anstrahlung der Schaufensterauslage von außen, also vom Schaufenster her, möglich. Dies hat den Vorteil, dass der Betrachter nicht geblendet wird. Außerdem ist bei dieser Art von Anstrahlung das Platzangebot für die auszustellenden Waren größer, da die Beleuchtungseinrichtung nicht, wie bei herkömmlichen Schaufensterauslagen, direkt in der Auslagefläche befestigt ist, sondern im Schaufenster selber. Ferner ist es denkbar, dass die transparente Scheibe zumindest ein Teil einer gläsernen Ladenpassage ist, beispielsweise eines Glasdachs, an dem eine oder mehrere Lautsprecher angebracht sind. Damit ist eine Beschallung von oben möglich.

Bei einer Weiterbildung der Erfindung erfolgt die Stromzufuhr unsichtbar. Im Falle einer Stromzufuhr kann die transparente Scheibe mit einer transparenten, elektrisch leitenden und leistungsübertragenden Schicht beschichtet sein. Die transparente Scheibe ist also frei von irgendwelchen sichtbaren Stromzuführleitungen, die ihr Erscheinungsbild beeinträchtigen könnten.

Die Schicht kann in Form von relativ schmalen, beispielsweise wenige Millimeter breiten, Leiterbahnen aufgetragen sein. Alternativ ist eine vollflächige Beschichtung der Scheibe möglich. Bevorzugt ist die Schicht eine transparente Folie auf Metallbasis bzw. eine metallisierende Folie. Die Leiterbahnen können dabei durch Folienstreifen gebildet werden.

Alternativ ist es auch möglich, die Stromzufuhr sichtbar auszuführen. Beispielsweise kann wenigstens ein Kabel, insbesondere als Flachkabel ausgebildet, an der Außenseite der Scheibe befestigt, insbesondere mit dieser verklebt sein. Eine Möglichkeit ist, an der Außenseite der Scheibe eine nutförmige Ausnehmung vorzusehen, in die das Kabel eingelegt und befestigt wird. Das Flachkabel dient vorzugsweise zur Stromversorgung von Halogenstrahlern. Alternativ ist es möglich relativ dünne Kabel mit einem Durchmesser von 0,07 mm bis 0,1 mm, insbesondere 0,03 mm bis 0,06 mm einzusetzen, die beispielsweise zur Stromversorgung von LED's dienen können.

Bei der Erfindung sind wenigstens zwei, miteinander verbindbare transparente Scheiben vorgesehen. Die Stromzufuhr befindet sich dabei zumindest teilweise zwischen den Scheiben. Die transparente Scheibe kann beispielsweise ein Verbundglaselement sein, bei dem wenigstens zwei Scheiben mittels einer Gießharzschicht miteinander verklebt sind. Die Stromzufuhr, beispielsweise in Form eines Kabels, kann dann in die Gießharzschicht eingebettet sein. Auch hier ist der Einsatz einer oder mehrerer transparenter, elektrisch leitender Schichten denkbar. Alternativ kann ein Verbundsicherheitsglaselement vorgesehen sein, bei dem wenigstens zwei Scheiben mittels einer Spezialfolie, einer sogenannten VSG-Folie, miteinander verbunden sind. Die Folie ist vorzugsweise aus Kunststoff, beispielsweise aus Polyvinylbutral (PVB).

Bei einer Weiterbildung der Erfindung ist der wenigstens eine Stromverbraucher zwischen den Scheiben angeordnet, beispielsweise eingebettet in die Gießharzschicht oder in eine isolierende Kunststoffschicht. Es können mindestens drei transparente Scheiben vorgesehen sein, von denen zwei Außenscheiben sind und mindestens eine eine Mittelscheibe ist. Der Stromverbraucher kann dabei in die Mittelscheibe integriert sein. Beispielsweise kann eine der Außenscheiben eine Isolierglasscheibe sein, die ihrerseits aus zwei Scheibenteilen besteht, die durch eine wärmedämmende Gasschicht voneinander getrennt sind.

Es ist möglich, dass bei mehreren Scheiben die einzelnen Scheiben durch ein Klemmsystem miteinander lösbar verbunden sind. Vorteilhaft ist es, eine Gummidichtung vorzusehen, mit der der Spalt zwischen den Scheiben abgedichtet werden kann. Es ist ein Austausch des Stromverbrauchers möglich, falls sich dieser zwischen den Scheiben befindet oder in eine Mittelscheibe integriert ist. Auch ist dadurch die Stromzufuhr für Reparaturen zugänglich.

Die Scheibe kann wenigstens einen Ausschnitt, der als Aufnahme für den Stromverbraucher ausgebildet ist, aufweisen. Der Ausschnitt kann beispielsweise eine Bohrung oder eine Ausfräsung sein, in die beispielsweise im Falle einer Beleuchtungseinrichtung eine Fassung eingesetzt wird, die ihrerseits ein Leuchtmittel aufnimmt. Die Befestigung des Stromverbrauchers, beispielsweise dessen Fassung, kann mittels eines Klebers erfolgen. Es kann ein Zweikomponentenkleber und/oder ein UV-aushärtender Kleber eingesetzt werden, bzw. ein Zweikomponentenkleber mit UV-aushärtender Komponente. Im Falle einer unsichtbaren Stromzufuhr kann der Kleber ebenfalls transparent sein. Darüber hinaus ist es natürlich möglich, auch die Fassung der Beleuchtungseinrichtung transparent auszubilden. Bei mehreren Scheiben, beispielsweise einem Verbundglaselement, besitzt vorzugsweise mindestens eine Scheibe den wenigstens einen Ausschnitt, während mindestens eine weitere Scheibe ausschnittsfrei ist und damit als Berührungsschutz für den Stromverbraucher dienen kann.

Das Gebäudedachelement kann zumindest teilweise aus einem transparenten Material bestehen und mindestens zwei transparente Scheiben bilden oder mindestens zwei scheibenförmige transparente Scheiben aufweisen. Es kann eine Beleuchtungseinrichtung in die transparenten Scheiben integriert sein oder an den transparenten Scheiben befestigt sein. Die Stromzufuhr zu der Beleuchtungseinrichtung kann unsichtbar durch die transparenten Scheiben erfolgen.

Das Dachelement aus transparentem Material oder das mindestens eine transparente Element des Dachelementes kann dazu verwendet werden, unsichtbar Strom einer Beleuchtungseinrichtung zuzuführen.

Hierzu kann eine transparente Scheibe mit einer transparenten, elektrisch leitenden und leistungsübertragenden Schicht beschichtet sein, die mindestens zwei Leiterbahnen bildet, so dass mehrere Leuchtmittel der Beleuchtungseinrichtung über die transparenten Leiterbahnen der elektrisch leistungsübertragenden Schicht mit Strom versorgbar sind.

Die transparente Scheibe bzw. das Dachelement kann aus einem transparenten Kunststoff oder aus Glas bestehen.

Am Rand des transparenten Elements sind elektrische Anschlüsse für die Stromversorgung der Leuchtmittel über die transparenten Leiterbahnen angeordnet, die beispielsweise an eine in die Halterung des Dachelementes integrierte Stromversorgungseinrichtung angeschlossen sind.

Die Leuchtmittel können beispielsweise aus LED-Dioden bestehen, wobei die LED-Dioden vorzugsweise in das transparente Element integriert sind. Die LED-Dioden können eine Punktmatrix bilden, so dass eine Laufschriftanzeige gebildet werden kann.

Besonders vorteilhaft ist, dass das transparente Dachelement bzw. das transparente Element aus zwei mit Abstand parallelen transparenten Scheiben gebildet sein kann, und dass die Leuchtmittel zwischen den Scheiben angeordnet werden können.

Jede der Scheiben kann mindestens eine transparente Leiterbahn tragen, so dass es möglich ist, dass jede der Scheiben vollflächig eine Leiterbahn aufweist. Auf diese Weise ist es möglich, hohe Ströme von über 10 A zu übertragen und somit auch eine Beleuchtungseinrichtung mit Niedervoltspannung zu betreiben.

Bei einer Weiterbildung der Erfindung ist vorgesehen, dass die transparente Scheibe aus einer Isolierglasscheibe besteht.

Die Glasscheiben können ihrerseits wiederum aus Verbundglasscheiben bestehen, die zwischen sich eine isolierende Kunststoffschicht aufweisen.

Das Gebäudedachelement kann wenigstens einen Teil eines Vordachs bilden das sich beispielsweise am Eingangsbereich von Gebäuden befindet. Es ist möglich mehrere verschiedenartige Stromverbraucher in das Gebäudedachelement des Vordachs zu integrieren. Beispielsweise kann es sich um eine Beleuchtungseinrichtung mit wenigstens einer Leuchte, beispielsweise einem Halogenstrahler, handeln. Alternativ oder zusätzlich kann eine Bewegungseinrichtung mit wenigstens einem Bewegungssensor vorgesehen sein. Auch eine Überwachungseinrichtung mit wenigstens einer Überwachungskamera ist alternativ oder zusätzlich einsetzbar. Alternativ oder zusätzlich kann eine Leuchtanzeigeeinrichtung vorgesehen sein, bei der es sich insbesondere um eine Laufschriftanzeige handelt. Die Laufschrift kann durch LED-Dioden gebildet werden, die insbesondere in Form einer Punktmatrix angeordnet sind. Alternativ ist es möglich, eine leuchtende Hausnummer durch Anordnung der LED-Dioden zu bilden. Es ist auch möglich eine herkömmliche, nichtleuchtende Hausnummer, beispielsweise eine Hausnummerntafel, zu integrieren und durch ebenfalls im Vordach integrierte Strahler anzustrahlen. Es ist möglich die Stromzufuhr, die zu der im Gebäudeelement des Vordachs integrierten Beleuchtungseinrichtung führt, unsichtbar auszuführen, so dass eine Art "Sternenhimmel" gebildet wird, wobei die einzelnen Leuchten für den Beobachter quasi abgekoppelt von ihrer Stromversorgung in der Luft zu schweben scheinen und damit die "Sterne" darstellen. Eine weitere Möglichkeit ist, eine Beschallungseinrichtung mit wenigstens einem Lautsprecher vorzusehen.

Das Gebäudedachelement kann in einem Wintergarten zur Bildung der Dachflächen verwendet werden.

Eine weitere Verwendung des Gebäudedachelementes ist beispielsweise bei einem Fußgängerübergang möglich, wie er beispielsweise als Übergang zwischen zwei Gebäuden oder beispielsweise bei Messebauten bekannt ist.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Die Unterteilung der Anmeldung in einzelne Abschnitte sowie Zwischenüberschriften beschränkt die unter diesen gemachten Aussagen nicht in ihrer Allgemeingültigkeit.

### Figurenbeschreibung

Mehrere Ausführungsbeispiele der Erfindung sind in den Zeichnungen dargestellt und werden im folgenden näher erläutert. In den Zeichnungen zeigen:
- Fig. 1: eine schematische Darstellung eines Längsschnitts durch ein transparentes Element eines ersten Ausführungsbeispiels des erfindungsgemäßen Gebäudedachelements,
- Fig. 2: eine schematische Darstellung eines Längsschnitts durch ein transparentes Element eines zweiten Ausführungsbeispiels des Gebäudedachelements,
- Fig. 3: eine schematische Darstellung eines Längsschnitts durch ein transparentes Element eines dritten Ausführungsbeispiels des Gebäudedachelements,
- Fig. 4: eine schematische Darstellung eines Längsschnitts durch ein transparentes Element eines vierten Ausführungsbeispiels des Gebäudeelements,
- Fig. 5: eine Draufsicht auf ein transparentes Element eines fünften Ausführungsbeispiels des Gebäudedachelements,
- Fig. 5A: eine Draufsicht auf das transparente Element gemäß Fig. 5 mit alternativer Stromführung,
- Fig. 6: eine schematische Darstellung eines sechsten Ausführungsbeispiels, wobei ein Vordach eines Hauseingangs gezeigt ist,
- Fig. 7: eine zweite Ausführungsform des Vordachs gemäß Fig. 6,
- Fig. 8: eine dritte Ausführungsform des Vordachs,
- Fig. 9: die Dachkonstruktion eines Wintergartens, und
- Fig. 10: ein Fußgängerüberweg mit integrierten beleuchteten Dachelementen.

Das transparente Element 6, 8 des erfindungsgemäßen Gebäudedachelements wird im folgenden beispielhaft anhand eines Glaselements erläutert. Alternativ kann das transparente Element 6, 8 auch aus transparentem Kunststoff bestehen, beispielsweise aus Acrylglas. Als Stromverbraucher ist beispielhaft ein elektrischer Verbraucher in Form einer Beleuchtungseinrichtung mit einem Leuchtmittel 14 gewählt. Die Stromzufuhr ist demzufolge eine Stromzufuhr.

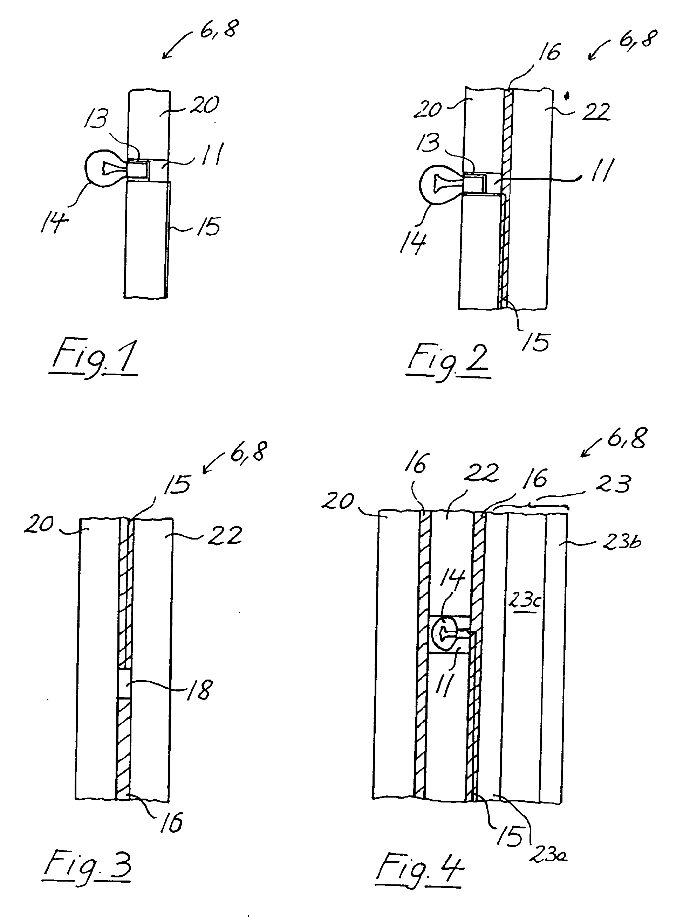

Fig. 1 zeigt ein transparentes Element 6 und 8 eines ersten Ausführungsbeispiels des erfindungsgemäßen Gebäudedachelements. Das transparente Element 6, 8 besteht dabei aus einer einzigen transparenten Scheibe 20. Es handelt sich dabei vorzugsweise um ein Einscheibenglas bestehend aus Floatglas bzw. Spiegelglas. Die Scheibendicke liegt zwischen 1,5 mm und 19 mm, in Ausnahmefällen bis zu 24 mm. Die transparente Scheibe 20 besitzt eine Bohrung 11, die als Aufnahme für das Leuchtmittel 14 dient. In Fig. 1 ist beispielhaft eine durchgehende Bohrung 11 gezeigt. Es ist jedoch auch möglich, eine Sacklochbohrung anzubringen, an die eine weitere Bohrung mit kleinerem Durchmesser anschließt, die ihrerseits zur Aufnahme der Stromzufuhr in Form eines Kabels 15 dient. In die Bohrung 11 ist eine Fassung 13 eingeklebt, in die das Leuchtmittel 14 eingeschraubt werden kann. Zur Verklebung wird ein Kleber, beispielsweise ein UV-aushärtender Kleber, verwendet. Die Fassung 13 ist mit einer Stromzufuhr in Form eines Kabels 15 verbunden. Das Kabel 15 kann beispielsweise ein Flachkabel, beispielsweise für Halogenstrahler, oder ein relativ dünnes Kabel mit bis zu 0,05 mm Durchmesser für LED-Dioden sein. Das Kabel 15 verläuft vorzugsweise an der dem Leuchtmittel 14 gegenüberliegenden Seite der transparenten Scheibe 20 bis zur Höhe der Bohrung 11 und dann durch die Bohrung 11 hindurch bis zur Fassung 13. Das Kabel 15 kann ebenfalls mit einer Klebeverbindung mit der Außenseite der transparenten Scheibe 20 verbunden sein. Es kann auch eine Nut zur Aufnahme des Kabels 15 vorgesehen sein, so dass es sauber und plan mit der Oberfläche des transparenten Elementes abschließt.

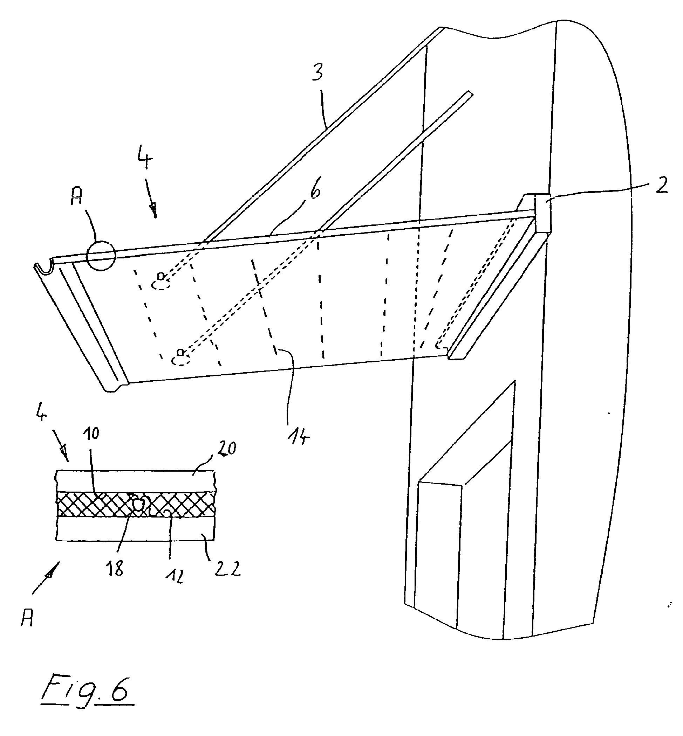

Anstelle des Kabels 15 kann auch eine transparente, elektrisch leitende und leistungsübertragende Schicht verwendet werden. Die Schicht kann eine Folie auf Metallbasis sein, die in Form von Leiterbahnen 10, 12 (Fig. 6) bildenden Folienstreifen an der Außenseite der transparenten Scheibe 20 aufgeklebt werden kann. Gegebenenfalls kann über die elektrisch leitende Schicht noch eine isolierende Deckschicht, beispielsweise ebenfalls eine Folie, aufgetragen werden. Das Aufbringen einer transparenten Schicht bietet den Vorteil, dass die Stromzufuhr nicht sichtbar ist und somit den ästhetischen Gesamteindruck des transparenten Elements 6, 8 nicht stört.

In Fig. 2 ist ein transparentes Element 6, 8 bei einem zweiten Ausführungsbeispiel des Gebäudedachelements dargestellt. Es handelt sich dabei um ein Verbundglaselement, das aus zwei transparenten Scheiben 20, 22 besteht. Die beiden transparenten Scheiben 20, 22 sind über eine Verbindungsschicht 16 miteinander verklebt. Bei der Verbindungsschicht 16 kann es sich um eine Schicht aus Gießharz handeln oder es können im Falle eines Verbundsicherheitsglases eine oder mehrere elastische, hochreißfeste Kunststoff-Folien, sogenannte VSG-Folien, eingesetzt werden. Als Kunststoff kann beispielsweise Polyvinylbutral (PVB) verwendet werden. Die Befestigung des Leuchtmittels 14 mitsamt der Fassung 13 kann in ähnlicher oder identischer Weise zu dem in Fig. 1 gezeigten Ausführungsbeispiel erfolgen. Das stromzuführende Kabel 15 ist jedoch bei diesem Ausführungsbeispiel in die Verbindungsschicht 16 eingebettet. Auch hier ist es möglich, eine transparente Schicht anzubringen, die isolierend von der Verbindungsschicht 16 abgedeckt wird.

Fig. 3 zeigt ein transparentes Element 6, 8 eines dritten Ausführungsbeispiels des Gebäudedachelements. Auch hier handelt es sich um ein Verbundglaselement, das aus zwei transparenten Scheiben 20, 22 besteht. Im Unterschied zu dem in Fig. 2 gezeigten Ausführungsbeispiel befindet sich das Leuchtmittel, das hier beispielhaft anhand einer LED-Diode 18 dargestellt ist, eingebettet in der Verbindungsschicht 16 zwischen den beiden transparenten Scheiben 20, 22. Die Stromzufuhr kann mittels eines in die Verbindungsschicht 16 eingebetteten Kabels 15 erfolgen oder alternativ über eine oder mehrere transparente, elektrisch leitende Schichten.

Fig. 4 zeigt ein transparentes Element 6, 8 eines vierten Ausführungsbeispiels des Gebäudedachelements. Es sind zwei transparente Scheiben 20, 22 vorgesehen, die über eine Verbindungsschicht 16 miteinander verklebt sind. Eine der beiden transparenten Scheiben 20, 22 ist über eine weitere Verbindungsschicht 16 mit einer Isolierglasscheibe 23 verklebt. Die Isolierglasscheibe 23 ihrerseits besitzt zwei Isolierglasscheibenteile 23a, 23b, die durch einen gasgefüllten Zwischenraum 23c voneinander getrennt sind. Das Gas wirkt dabei als Wärmedämmung. Als Gas kann Luft oder ein Edelgas, beispielsweise Argon, Krypton oder Xenon eingesetzt werden. Auch Gasgemische sind möglich. Der Abstand der beiden isolierglasscheibenteile 23a und 23b beträgt 5mm bis 25mm. Das transparente Element 6, 8 wird also von zwei Außenscheiben 20, 23 und einer Mittelscheibe 22 gebildet. Die Mittelscheibe 22 besitzt eine Bohrung 11 zur Aufnahme eines Leuchtmittels. Das Leuchtmittel 14 ist also vollständig in die Mittelscheibe 22 integriert. Die Stromzufuhr für das Leuchtmittel 14 kann beispielsweise mittels eines Kabels 15, das in einer der beiden Verbindungsschichten 16 eingebettet ist, erfolgen. Darüber hinaus kann auch hier alternativ eine transparente elektrisch leitende Schicht angebracht werden. Alternativ kann anstelle der in den Fig. 3 und 4 gezeigten Verbindungsschicht 16, die zur festen, in der Regel unlösbaren Verbindung von wenigstens zwei Scheiben dient, ein Klemmsystem eingesetzt werden, um die transparenten Scheiben lösbar aneinander zu befestigen. Dadurch ist das Leuchtmittel 14 zugänglich und kann im Schadensfall ausgewechselt werden. Auch wird dadurch eine Reparatur an der Stromzufuhr möglich, beispielsweise falls ein Wackelkontakt auftritt oder ein Kabel beschädigt ist.

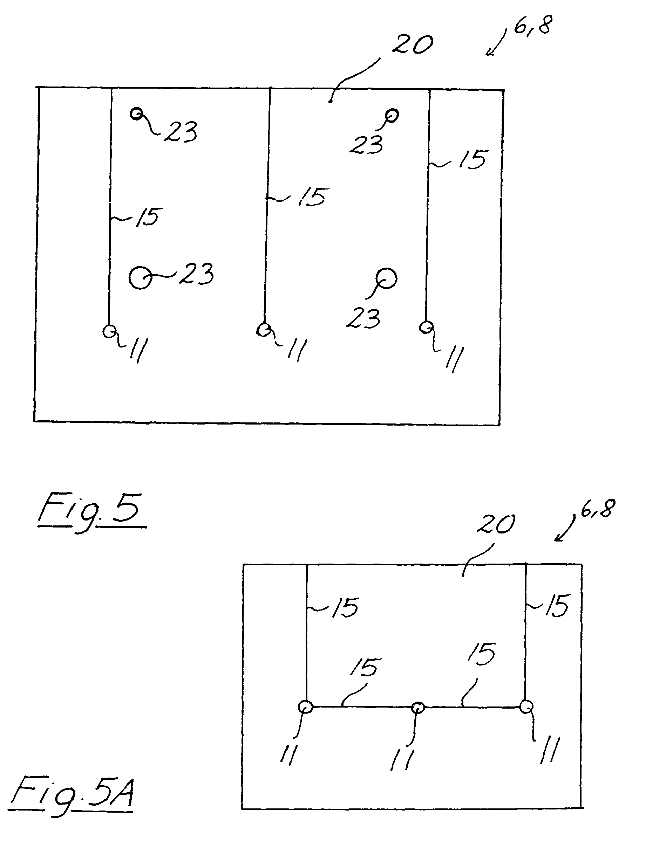

In Fig. 5 ist ein fünftes Ausführungsbeispiel des transparenten Elementes 6, 8 ohne Leuchtmittel 14 dargestellt. Bei diesem Ausführungsbeispiel sind die stromführenden Kabel 15 bewusst sichtbar angeordnet. Sauber angebrachte sichtbare Kabel können dem ästhetischen Gesamteindruck des transparenten Elementes einen gewissen Reiz geben, ähnlich zu Uhren, bei denen das Innenleben, also das Laufwerk, voll sichtbar ist. Die sichtbaren Kabel 15 verlaufen ähnlich zu dem in Fig. 2 dargestellten Ausführungsbeispiel in der Verbindungsschicht 16 zwischen den Scheiben 20, 22 bis zur Höhe von Bohrungen 11 und durch diese hindurch, so dass sie mit Leuchtmittel 14 verbunden werden können. Es sind ferner weitere Bohrungen 23 vorgesehen, die zur Befestigung des transparenten Elements dienen, beispielsweise als Vordachglas mit Hilfe von Trägern oder Stangen. Die Bohrungen 23 können je nach Anwendung beliebig platziert werden.

Fig. 5A zeigt das transparente Element gemäss Figur 5 mit alternativer Stromführung. Die Kabel 15 zur Stromversorgung der Verbraucher können in Reihe bzw. in einem Ring angeordnet sein.

Fig. 6 zeigt eine Hausfassade, an der ein Vordach als Gebäudedachelement mit Hilfe einer Halterung 2 befestigt ist. Die Halterung 2 kann von Halterungsstangen 3 oder Seilen unterstützt werden, um höhere Dachlasten zu ermöglichen.

Das in Fig. 6 gezeigte Dachelement 4 besteht aus einem transparenten Material, z.B. einer Acrylglasscheibe oder einer Glasscheibe.

An der der Halterung 2 zugewandten Seite des Dachelementes 4 treten an den Stirnseiten des Dachelementes 4 zwei Leitungsanschlüsse heraus, die mit mindestens zwei in das Dachelement 4 integrierten Leiterbahnen 10, 12 verbunden sind, die auf dem Dachelement 4 oder dem transparenten Element 6 des Dachelementes 4 durch Beschichtung aufgebracht sind. Die transparenten Leiterbahnen ermöglichen es, Stromstärken von mehr als 10A bis zu ca. 20A an eine Beleuchtungseinrichtung zu übertragen. Die Beschichtung von Glas mit einer transparenten elektrisch leitenden Schicht ist grundsätzlich aus der WO 99/03111 bekannt.

Die Strombahnen 10, 12 können auf dem transparenten Element 6 nach einem bestimmten Muster aufgebracht sein, um die Stromversorgung der Leuchtmittel 14 der Beleuchtungseinrichtung zu ermöglichen.

Bevorzugt besteht das Dachelement 4 bzw. das transparente Element 6 aus einem Verbundglas aus zwei Glasscheiben und einer dazwischen angeordneten isolierenden Kunststoffschicht, wobei dann die Leiterbahnen 10, 12 vollflächig auf jeweils eine der Glasscheiben aufgetragen werden kann.

Die Leuchtmittel 14 sind dann entweder auf einer der Scheiben, z.B. bei dem Dachelement 4, auf deren Unterseite oder vor Witterungseinflüssen geschützt, zwischen den beiden Glasscheiben angeordnet. Die Leuchtmittel 14 könnten an einer beliebigen Stelle des Dachelementes angeordnet sein und mit beiden Leiterbahnen 10, 12 kontaktieren, um mit Strom versorgt zu werden. Stromzuführende Elemente sind dann auf dem Dachelement 4 an keiner Stelle sichtbar.

Das Detail A von Fig. 6 entspricht dem in der Fig. 3 dargestellten Ausführungsbeispiel und zeigt einen Schnitt durch ein Dachelement 4 bzw. durch ein transparentes Element 6, 8, das aus einer Verbundglasscheibe gebildet ist. Alternativ kann als Dachelement 4 bzw. als transparentes Element 6 auch eine Isolierglasscheibe 23 verwendet werden, deren Glasscheiben jeweils aus Verbundglasscheiben bestehen können.

Im Fall einer Isolierglasscheibe 23 können die Leuchtmittel 14 auch in dem Hohlraum zwischen den Scheiben der Isolierglasscheibe 23 angeordnet sein.

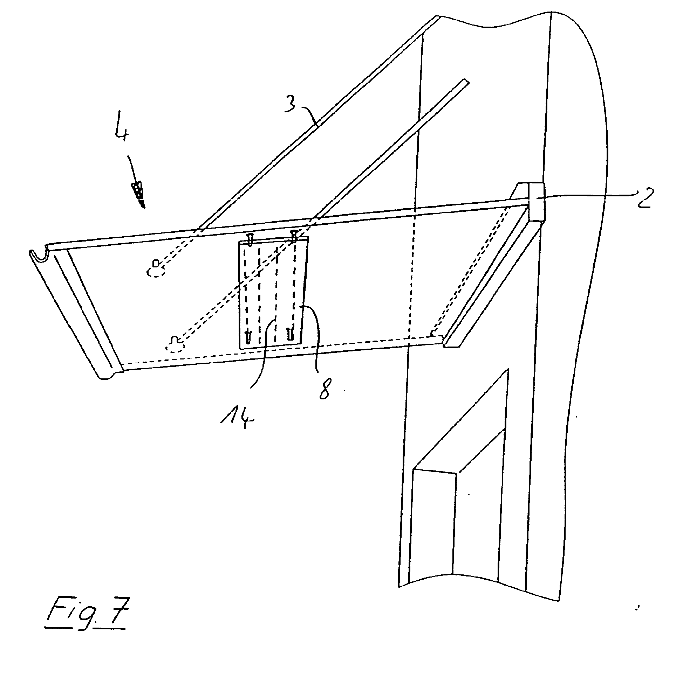

Fig. 7 zeigt ein alternatives Ausführungsbeispiel gemäß Fig. 6, bei dem die Leuchtmittel 14 in einem scheibenförmigen transparenten Element 8 angeordnet sind, das an dem Dachelement 4 befestigt ist.

In diesem Fall kann das Dachelement 4 selbst auch aus nicht transparentem Material bestehen und nur das scheibenförmige Element 8 transparent sein. Die Stromversorgung erfolgt dann unsichtbar über die Befestigungselemente des transparenten Elementes 8 und die transparenten Leiterbahnen 10, 12 sind dann in dem transparenten Element 8 und können auch zusätzlich in dem Dachelement 4 vorgesehen sein.

Die bevorzugte Ausführungsform des Ausführungsbeispiels der Fig. 7 besteht aus einem transparenten Dachelement 4 mit einem scheibenförmigen transparenten Element 8.

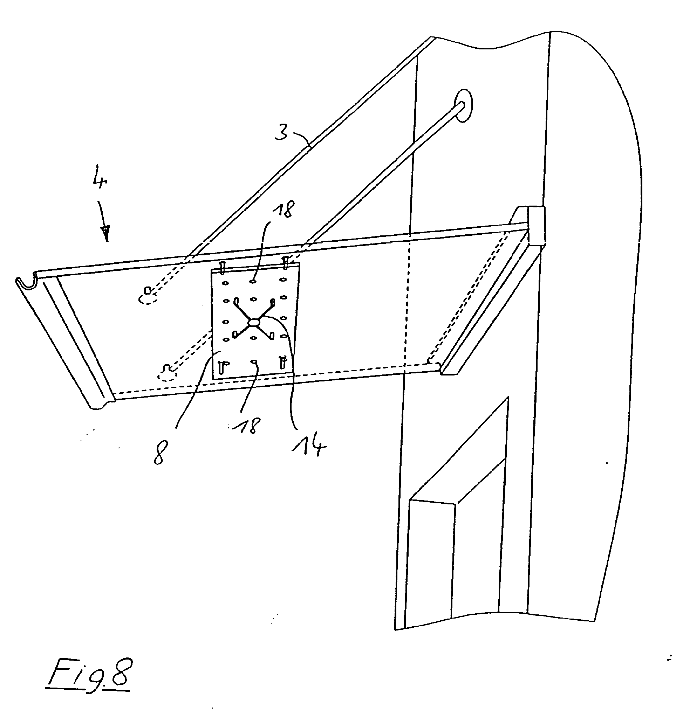

Fig. 8 zeigt ein weiteres Ausführungsbeispiel gemäß Fig. 6, bei dem in dem scheibenförmigen transparenten Element 8 mehrere LED-Dioden 18 vorgesehen sind, die in dem vorzugsweise aus einer Glasscheibe bestehenden Element 8 integriert sind. Zusätzliche Leuchtmittel 14 können auf der Unterseite des transparenten Elementes 8 befestigt sein und unsichtbar mit Strom versorgt sein.

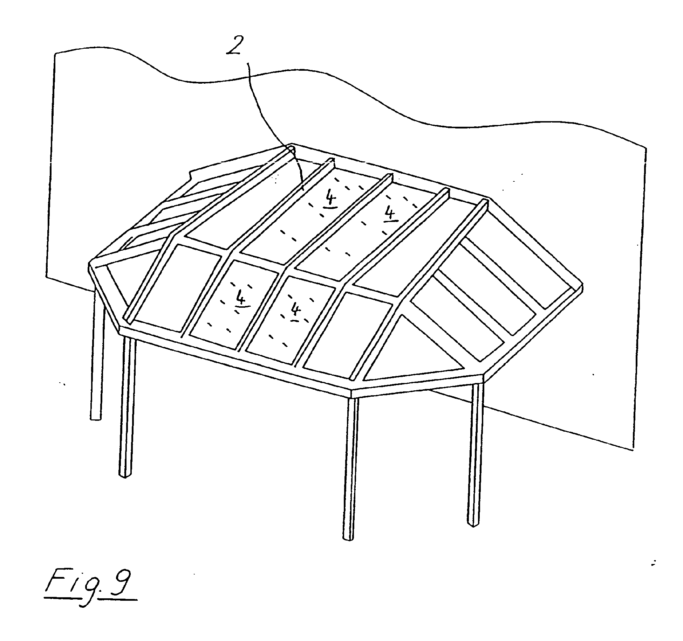

Fig. 9 zeigt die Integration von Dachelementen 4 in einen Wintergarten, wodurch es möglich ist, in einem Wintergarten eine beleuchtete Dachfläche zu schaffen ohne störende und sichtbare Stromzuführeinrichtungen und ohne separate Beleuchtungseinrichtungen auf den Trägern des Wintergartens vorzusehen.

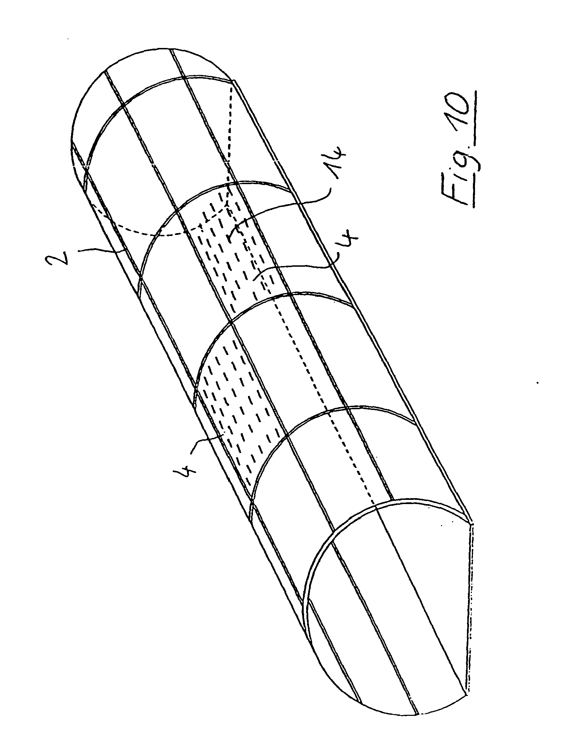

Fig. 10 zeigt eine weitere Anwendung bei Fußgängerübergängen, wie sie auf Messegeländen auch zur Verbindung zweiter Gebäude bekannt sind.

Bei allen Ausführungsbeispielen, aber insbesondere bei Dachelementen 4 in Fußgängerübergängen können die Beleuchtungseinrichtungen auf den Dachelementen 4 auch derart angeordnet sein, dass sie mit Hilfe der LED-Dioden 18 eine Punktmatrix bilden, die Informationen anzeigt. Beispielsweise ist es möglich, Werbung oder andere Informationen computergesteuert per Laufschriftanzeige über die LED-Dioden 18 per Leuchtmittel 14 auf den Dachelementflächen darzustellen.

## Patentansprüche

1. Gebäudedachelement, insbesondere Verbundglaselement, das wenigstens zwei transparenten Scheiben (20, 22) aufweist, wobei es wenigstens eine Aufnahme für wenigstens einen Stromverbraucher (14) aufweist und die Stromzufuhr (15) zu dem Stromverbraucher (14) in das Gebäudedachelement (6, 8) integriert ist, indem sie zwischen den Scheiben (20, 22) verläuft.

2. Gebäudedachelement nach Anspruch 1, **dadurch gekennzeichnet, dass** die Stromzufuhr unsichtbar erfolgt, insbesondere mittels einer Beschichtung der Scheibe (20, 22, 23) mit wenigstens einer transparenten, vorzugsweise elektrisch leitenden und leistungsübertragenden, Schicht.

3. Gebäudedachelement nach Anspruch 2, **dadurch gekennzeichnet, dass** die Schicht in Form von relativ schmalen Leiterbahnen (10, 12) aufgetragen ist.

4. Gebäudedachelement nach einem der Ansprüche 2 oder 3, **dadurch gekennzeichnet, dass** die Schicht eine transparente Folie auf Metallbasis ist, wobei vorzugsweise die Leiterbahnen (10, 12) durch Folienstreifen gebildet sind.

5. Gebäudedachelement nach einem der vorhergehenden Ansprüche, **dadurch gekennzeichnet, dass** wenigstens zwei, miteinander verbindbare Scheiben (20, 22, 23) vorgesehen sind und sich die Stromzufuhr zumindest teilweise zwischen den Scheiben befindet.

6. Gebäudedachelement nach einem der vorhergehenden Ansprüche, **dadurch gekennzeichnet, dass** wenigstens ein Stromverbraucher zwischen den Scheiben (20, 22, 23) angeordnet ist.

7. Gebäudedachelement nach einem der vorhergehenden Ansprüche, **dadurch gekennzeichnet, dass** mindestens drei Scheiben vorgesehen sind, von denen zwei Außenscheiben (20, 23) und mindestens eine eine Mittelscheibe (22) ist, wobei der Stromverbraucher in die Mittelscheibe (22) integriert ist.

8. Gebäudedachelement nach einem der Ansprüche 5 bis 7, **dadurch gekennzeichnet, dass** die Scheiben (20, 22, 23) durch ein Klemmsystem miteinander lösbar verbunden sind.

9. Gebäudedachelement nach einem der vorhergehenden Ansprüche, **dadurch gekennzeichnet, dass** die Scheibe (20, 22, 23) wenigstens einen Ausschnitt, insbesondere eine Bohrung (11), aufweist, der als Aufnahme für den Stromverbraucher ausgebildet ist, wobei vorzugsweise bei mehreren Scheiben (20, 22, 23) mindestens eine Scheibe den Ausschnitt aufweist und mindestens eine weitere ausschnittsfreie Scheibe (20, 22, 23) als Berührungsschutz dient.

10. Gebäudedachelement nach einem der vorhergehenden Ansprüche, **dadurch gekennzeichnet, dass** es wenigstens einen Teil eines Vordachs bildet.

11. Gebäudedachelement nach einem der vorhergehenden Ansprüche, **dadurch gekennzeichnet, dass** in das Vordach mehrere verschiedenartige Stromverbraucher integriert sind, wobei vorzugsweise die Stromverbraucher ausgewählt sind aus der Gruppe mit Beleuchtungseinrichtung, Bewegungsmeldeeinrichtung, Überwachungseinrichtung, Leuchtanzeigeeinrichtung und Beschallungseinrichtung.

12. Gebäudedachelement nach einem der vorhergehenden Ansprüche, **dadurch gekennzeichnet, dass** es sich bei der Leuchtanzeigeeinrichtung um eine Laufschriftanzeige handelt, die vorzugsweise aus insbesondere eine Punktmatrix bildenden LED-Dioden gebildet ist.

## Claims

1. Roof element for buildings, in particular a composite glass element, having at least two transparent panes (20, 22), where said element has at least one receptacle for at least one current consumer (14) and the current supply (15) to the current consumer (14) is integrated into the roof element (6, 8) in that it passes between the panes (20, 22).

2. Roof element for buildings according to Claim 1, **characterized in that** the current is supplied invisibly, in particular by means of a coating of the pane (20, 22, 23) with at least one transparent and preferably electrically conducting and power-transmitting layer.

3. Roof element for buildings according to Claim 2, **characterized in that** the layer is applied in the form of relatively narrow conducting tracks (10, 12).

4. Roof element for buildings according to one of Claims 2 or 3, **characterized in that** the layer is a transparent, metal-based foil, where the conducting tracks (10, 12) are preferably formed by foil strips.

5. Roof element for buildings according to one of the preceding claims, **characterized in that** at least two interconnectable panes (20, 22, 23) are provided and the current supply is located at least partially between the panes.

6. Roof element for buildings according to one of the preceding claims, **characterized in that** at least one current consumer is arranged between the panes (20, 22, 23).

7. Roof element for buildings according to one of the preceding claims, **characterized in that** at least three panes are provided, of which two are outer panes (20, 23) and at least one is a middle pane (22), where the current consumer is integrated into the middle pane (22).

8. Roof element for buildings according to one of Claims 5 to 7, **characterized in that** the panes (20, 22, 23) are detachably interconnected by a clamping system.

9. Roof element for buildings according to one of the preceding claims, **characterized in that** the pane (20, 22, 23) has at least one cutout, in particular an opening (11), designed as a receptacle for the current consumer, where in the case of several panes (20, 22, 23), at least one pane has the cutout and at least one further cutout-free pane (20, 22, 23) serves as a contact protection.

10. Roof element for buildings according to one of the preceding claims, **characterized in that** it forms at least one part of a porch roof.

11. Roof element for buildings according to one of the preceding claims, **characterized in that** several different current consumers are integrated into the porch roof, where the current consumers are preferably selected from the group with lighting unit, movement sensor unit, surveillance unit, illuminated display unit and sound system.

12. Roof element for buildings according to one of the preceding claims, **characterized in that** the illuminated display unit is a moving sign display that is formed from light-emitting diodes forming in particular a dot matrix.

## Revendications

1. Élément de toit pour bâtiments, en particulier élément en verre feuilleté, présentant au moins deux vitres transparentes (20, 22), sachant que celui-ci comprend au moins un logement pour au moins un consommateur de courant (14) et que l'arrivée de courant (15) pour le consommateur de courant (14) est intégrée dans l'élément de toit pour bâtiments (6, 8) en s'étendant entre les deux vitres (20, 22).

2. Élément de toit pour bâtiments selon la revendication 1, **caractérisé en ce que** l'arrivée de courant est invisible, en particulier en revêtant les vitres (20, 22, 23) d'au moins une couche transparente, laquelle conduit de préférence l'électricité et transmet la puissance.

3. Élément de toit pour bâtiments selon la revendication 2, **caractérisé en ce que** la couche est appliquée sous forme de pistes conductrices (10, 12) relativement étroites.

4. Élément de toit pour bâtiments selon une des revendications 2 ou 3, **caractérisé en ce que** la couche est un film transparent à base métallique, sachant que les pistes conductrices (10,12) sont formées de préférence par des bandes de film.

5. Élément de toit pour bâtiments selon une des revendications précédentes, **caractérisé en ce que** sont prévues au moins deux vitres (20, 22, 23) pouvant être reliées entre elles, et que l'arrivée de courant se trouve au moins en partie entre les vitres.

6. Élément de toit pour bâtiments selon une des revendications précédentes, **caractérisé en ce qu'**au moins un consommateur de courant est placé entre les vitres (20, 22, 23).

7. Élément de toit pour bâtiments selon une des revendications précédentes, **caractérisé en ce que** sont prévues au moins trois vitres dont deux vitres extérieures (20, 23) et au moins une vitre centrale (22), sachant que le consommateur de courant est intégré dans la vitre centrale (22).

8. Élément de toit pour bâtiments selon une des revendications 5 à 7, **caractérisé en ce que** les vitres (20, 22, 23) sont reliées entre elles par un système de serrage de telle manière qu'il est possible de les détacher.

9. Élément de toit pour bâtiments selon une des revendications précédentes, **caractérisé en ce que** les vitres (20, 22, 23) présentent au moins une entaille, en particulier un orifice (11), conçue de manière à servir de logement au consommateur de courant, sachant que, lorsque plusieurs vitres (20, 22, 23) sont utilisées, au moins une vitre présente de préférence l'orifice et au moins une autre vitre (20 ,22 ,23) est entière de manière à servir de protection contre le contact.

10. Élément de toit pour bâtiments selon une des revendications précédentes, **caractérisé en ce que** cet élément forme au moins une partie d'un avant-toit.

11. Élément de toit pour bâtiments selon une des revendications précédentes, **caractérisé en ce que** plusieurs consommateurs de courant de différents types sont intégrés dans l'avant-toit, sachant que les consommateurs de courant sont de préférence sélectionnés dans le groupe des dispositifs d'éclairage, des dispositifs de détection de présence, des dispositifs de surveillance, des dispositifs d'affichage lumineux et des dispositifs de sonorisation.

12. Élément de toit pour bâtiments selon une des revendications précédentes, **caractérisé en ce qu'**il s'agit, pour le dispositif d'affichage lumineux, d'un afficheur défilant composé en particulier de diodes électroluminescentes formant une matrice à points.
